# EUROPÄISCHE PATENTSCHRIFT

(11) **EP 2 250 653 B1**
(45) Veröffentlichungstag und Bekanntmachung des Hinweises auf die Patenterteilung: **25.09.2013**
(21) Anmeldenummer: 09717243.1
(22) Anmeldetag: 26.02.2009
(51) Int. Cl.: H01F 27/29, H01B 17/42, H02G 15/064

(54) **LEITERANSCHLUSS AN TRANSFORMATOREN**
CONDUCTOR CONNECTION ON TRANSFORMERS
BORNE POUR CÂBLE SUR DES TRANSFORMATEURS

(30) Priorität: 07.03.2008 DE 102008013204
(43) Veröffentlichungstag der Anmeldung: 17.11.2010
(73) Patentinhaber: ABB Technology AG, 8050 Zürich (CH)
(72) Erfinder: ZILLMANN, Karl-Heinz, 34431 Marsberg (DE); MÖNIG, Wolfgang, 59929 Brilon (DE); WEBER, Benjamin, 59955 Winterberg (DE)
(74) Vertreter: Partner, Lothar
(86) Internationale Anmeldenummer: PCT/EP2009/001358
(87) Internationale Veröffentlichungsnummer: WO 2009/109322

(56) Entgegenhaltungen:
- WO-A-2008/027010
- CH-A- 406 343
- GB-A- 899 738
- US-A- 3 515 799
- US-A- 3 531 580
- US-A- 3 978 277

## Beschreibung

Die Erfindung betrifft einen Leiteranschluss an Transformatoren, insbesondere an Trockentransformatoren, mit einem Anschlussstück, welches von einem Leiter aus elektrisch leitfähigem Material gebildet ist, der mit einem Ende einer Wicklung des Transformators leitend verbunden ist, wobei das Anschluss-Stück in geringem Abstand zu einem weiteren Anschluss-Stück mit unterschiedlichem Potential angeordnet ist und an seinem Umfang zumindest abschnittweise mit einer elektrischen Isolierung versehen ist.

Es ist allgemein bekannt aus US 978 277 A und GB 899 738 , Leitungsdurchführungen, wie Leiteranschlüsse an Transformatoren, so auch an Trockentransformatoren, gegeneinander sowie gegen Erde beziehungsweise Masse zu isolieren.

Bei Transformatoren neuerer Bauart wird verstärkt kompakte Gestaltung gefordert, was zur Folge hat, dass die Raumverhältnisse oftmals sehr beengt sind, so dass die vorgesehene Anordnung der Anschussleiter wegen des erforderlichen spannungsbedingten Abstandes nur erschwert umgesetzt werden kann. Hieraus ergibt sich als Lösung, die Anschlussleiter in geringem Abstand zueinander, zum Beispiel parallel zueinander oder sich kreuzend, anzuordnen.

Dabei resultiert jedoch die Notwendigkeit, die Anschlussleiter mit einer über- beziehungsweise durchschlagsicheren Isolierung zu versehen und auf ausreichende Kriechstrecken zu achten, um Kriechströme zu vermeiden. Isolierungen sind an sich bekannt, zum Beispiel als Isolierschläuche oder als auf den jeweiligen Leiter aufgewickelte Isolierung.

Aus der CH 406 343 A ist bekannt, einen in eine Gießharzplatte eingebetteten Leitungsbolzen gegen Undichtigkeiten dadurch zu sichern, dass an den Bolzen radial abstehende scheiben angeschweißt oder angelötet sind, die im Gießharz formschlüssig verankert sind.

Ausgehend von diesem Stand der Technik ist es Aufgabe der Erfindung, einen Anschlussleiter der eingangsgenannten Art anzugeben, der sich auf einfache Weise herstellen und unter Berücksichtigung der geschilderten beengten räumlichen Verhältnisse bei Anschlussleitern für Transformatoren elektrisch sicher einsetzen lässt. Ferner soll ein Verfahren zu dessen Herstellung angegeben werden.

Diese Aufgabe wird erfindungsgemäß gelöst durch die kennzeichnenden Merkmale der Ansprüche 1 und 10 bis 12.

Demgemäß ist erfindungsgemäß vorgesehen, dass der das Anschlussstück bildende Leiter mit wenigstens einem radial abstehenden Schirm versehen ist, dessen Anschlussbereich punktuell, zum Beispiel an zwei diametral gegenüberliegenden Punkten, oder vollumfänglich mit dem Leiter verbunden ist. Dies kann mittels Schweißen oder Löten oder auch mittels leitfähigem Kleber erfolgen. Wesentlich für die Erfindung ist darüber hinaus, dass der Leiter und der wenigstens eine radial abstehende Schirm mit einer Isolierung versehen sind, wobei die Umfangsfläche des Anschlussstücks sowie die gesamte Oberfläche des wenigstens einen radial abstehenden Schirms mit elektrisch nicht leitfähigem Material beschichtet ist.

Mit dieser Gestaltung sind die beiden angesprochenen zu lösenden Probleme, nämlich die Isolation gegenüber anderem Potential wie auch die Vermeidung von Kriechströmen durch die Einbeziehung von ausreichenden Kriechstrecken, auf äußerst einfache wie auch vorteilhafte Weise gelöst.

Die Oberflächen aller zum Anschlussleiter gehörigen Teile sind ausreichend elektrisch isoliert und durch die Anbringung von wenigstens einem radial abstehenden Schirm, dessen Oberfläche, wie bereits gesagt, ebenfalls mit einer Isolierung versehen ist, wird die vorhandene Kriechstrecke entsprechend der radialen Erstreckung des Schirmes von der Leiteroberfläche aus erhöht.

Vorteilhafterweise ist die die Isolierung des Anschlussstücks einschließlich des wenigstens einen radial abstehenden Schirms von einer Pulverlackschicht aus elektrisch nicht leitfähigem Material gebildet. Diese Pulverlackschicht kann auf verschiedene Weise, die Gegenstand der später behandelten Verfahrensansprüche ist, hergestellt werden.

In günstiger Weiterbildung der Erfindung kann der Leiteranschluss dadurch gekennzeichnet sein, dass das Anschlussstück mit 3 Schirmen oder mehr versehen ist Die Anzahl der Schirme sowie deren axialer Abstand auf dem das Anschlussstück bildenden Leiter ist im wesentlichen bestimmt durch das jeweilige Spannungsniveau des Transformators sowie durch die vorhandenen räumlichen Bedingungen.

Gemäß einer bevorzugten Gestaltungsvariante der Erfindung ist der Leiteranschluss dadurch gekennzeichnet, dass als elektrisch nicht leitendes Material für die Isolierbeschichtung ein Pulverlack aus Epoxydharz vorgesehen ist.

Eine weitere alternative Ausführungsform des erfindungsgemäßen Leiteranschlusses ist dadurch gekennzeichnet, dass als elektrisch nicht leitendes Material für die Isolierbeschichtung ein Pulverlack aus Polyesterharz vorgesehen ist.

Eine dritte Alternative für eine vorteilhafte Ausführungsform des erfindungsgemäßen Leiteranschlusses kann darin bestehen, dass als elektrisch nicht leitendes Material für die Isolierbeschichtung ein Pulverlack aus Acrylharz vorgesehen ist.

Vorteilhafter ist für die erfindungsgemäße Beschichtung des Leiteranschlusses vorgesehen, dass die Schichtdicke der Isolierschicht zwischen 0,5 mm und 2,5 mm beträgt, vorzugsweise 1 mm beträgt.

Im Hinblick auf die erhöhte Gefahr von Spannungsüberschlägen im Bereich von Kanten und sprunghaften Querschnittsänderungen infolge von an solchen Stellen bevorzugterweise auftretenden Spannungskonzentrationen ist bei der erfindungsgemäßen Gestaltung des Leiteranschlusses darauf geachtet, dass die Isolierung in Bereichen von Querschnittsänderungen und Kanten als abgerundete Schicht mit verhältnismäßig großen Radien ausgeführt ist, so dass mögliche Spannungskonzentrationen des elektrischen Feldes vermieden sind. Infolge dieser abgerundeten Profilierung ergibt sich ein nahezu harmonischer Spannungsverlauf, der keinesfalls jedwelche Spannungsüberhöhungen befürchten lässt.

Als weitere Aufgabe hat die Erfindung das Problem der Herstellung des erfindungsgemäßen Leiteranschlusses zu lösen.

Demgemäß ist erfindungsgemäß zur Lösung ein insgesamt vier Fertigungs-Schritte umfassendes Verfahren vorgesehen.

Dabei erfolgt in einem ersten Schritt das Anordnen und Positionieren einer entsprechenden Anzahl von einteiligen Schirmen, die radial von dem als Anschlussstück vorgesehenen Leiter abstehen, und welche zuvor mit möglichst engpassend ausgeschnittenen Aussparungen versehen worden sind, welche den als Anschlussstück vorgesehenen Leiter umfassen.

Alternativ könnten die Schirme auch mehrteilig, zum Beispiel zweiteilig, ausgeführt sein, wobei die zentrale Aussparung für den diese Aussparung durchgreifenden Leiter selbstverständlich auch hier vorzusehen ist. Zusätzlich wären aber die beiden Teile entlang ihrer, zum Beispiel jeweils radial laufenden, Trennlinien miteinander zu verbinden, was einen zusätzlichen Arbeitsgang bedeutet.

In einem nächsten Schritt werden die Schirme im vorgesehenen Abstand mit dem als Anschlussstück vorgesehenen Leiter verbunden, vorzugsweise mittels Punktschweißung oder mittels umlaufender Kehlnaht. Es kann aber auch eine Lötverbindung vorgesehen sein.

In einem weiteren Schritt wird das aus dem Leiter und den daran befestigten Schirmen gebildete Anschlussstück erwärmt und, nachdem es die vorgesehene Erwärmungstemperatur, zum Beispiel 150 °C, erreicht hat, in ein Behältnis mit einem darin befindlichen Pulverlack eingetaucht und darin bewegt. Dadurch wird bewirkt, dass der Pulverlack an der Oberfläche des erwärmten Anschlussstückes anhaftet und eine geschlossene porenfreie Schicht bildet.

In einem letzten Arbeitsschritt schließlich wird das dieserart beschichtete Anschlussstück nach einer vorgegebenen Verweildauer dem Behältnis mit dem darin verbliebenen restlichen Pulverlack wieder entnommen und zum Abkühlen abgelegt. So dann wird es mit dem betreffenden Ende der Wicklung des Transformators leitend verbunden.

Alternativ zur thermisch induzierten Beschichtung mit organischen Isoliermaterialien kann die Beschichtung auch mittels eines elektrostatischen Beschichtungsverfahrens erfolgen, wobei die mechanischen Vorarbeiten wie Anpassen und Positionieren der Schirme sowie deren dauerhafte Verbindung mit dem als Anschlussstück vorgesehenen Leiter in gleicher Weise wie vorstehend für die thermisch induzierte Beschichtung beschrieben, erfolgen.

Alternativ zur thermisch induzierten Beschichtung mit organischen Isoliermaterialien kann die Beschichtung auch mittels eines elektrophoretischen Beschichtungsverfahrens erfolgen, wobei auch hier die mechanischen Vorarbeiten wie Anpassen und Positionieren der Schirme sowie deren dauerhafte Verbindung mit dem als Anschlussstück vorgesehenen Leiter in gleicher Weise wie vorstehend für die thermisch induzierte Beschichtung beschrieben, erfolgen.

Diese und weitere vorteilhafte Ausgestaltungen und Verbesserungen der Erfindung sind Gegenstand der Unteransprüche.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

Es zeigen:
- Fig. 1: einen Längsschnitt durch einen erfindungsgemäßen Leiteranschluss
- Fig. 2: eine Stirnansicht auf einen erfindungsgemäßen Leiteranschluss.

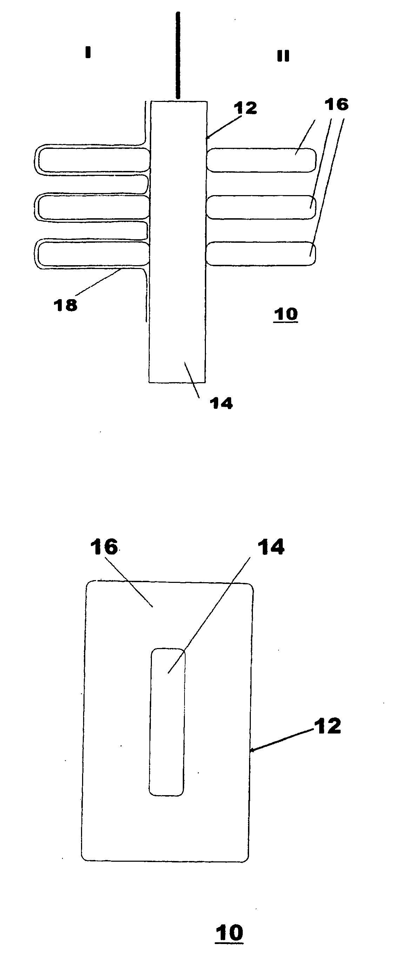

In Fig. 1 ist ein Längsschnitt durch einen erfindungsgemäßen Leiteranschluss 10 dargestellt, der von einem Anschlussstück 12 gebildet ist, welches mit einem hier nicht dargestellten Ende einer ebenfalls nicht dargestellten Wicklung verbunden ist.

Das Anschlussstück 12 besteht im wesentlichen aus einem Leiter 14, der einen rechteckförmigen Querschnitt aufweist und dessen Länge so gewählt ist, dass eine elektrische Verbindung des hier nicht gezeigten Transformators mit einem elektrischen Netz problemlos möglich ist.

Hierbei können infolge einer aufgrund der durch bauliche Verhältnisse bedingten Enge erforderlichen sehr kompakten Bauweise des Transformators insbesondere an seiner Oberspannungsseite die Abstände der Anschlussleiter unterschiedlichen Potentials sehr gering werden oder deren Leitungsführung einen so ungünstigen Verlauf erfordern, zum Beispiel sich kreuzende Leiter in engem Abstand, so dass bei unzureichenden Isolierungs-Maßnahmen die Gefahr von Spannungsüberschlägen oder zumindest von Kriechströmen bestehen kann.

Als Kriechströme werden allgemein solche Leckströme bezeichnet, die an der Oberfläche eines Isolierstoffes entlang, das heißt entlang einer Kriechstrecke, fließen. Als Kriechstrecke wird die kürzeste Entfernung entlang der Oberfläche eines Isolierstoffes zwischen zwei leitenden Teilen bezeichnet. Die Kriechstrecken sind abhängig von der Bemessungsspannung, dem Verschmutzungsgrad und den Eigenschaften der Isolierwerkstoffe selbst abhängig. Will man also Kriechströme vermeiden oder sicher ausschließen, ist neben möglicher Verschmutzung insbesondere auf große Kriechstrecken zu achten.

Demgemäß ist der zum Anschlussstück 12 gehörige Leiter 14 zusätzlich mit wenigstens einem radial abstehenden, den Leiter 14 vollumfänglich umfassenden Schirm 16 versehen, der wie der Leiter 14 auch aus elektrisch leitendem Material besteht und mit dem Leiter 14 elektrisch leitend verbunden ist. Im gezeigten Beispiel gemäß Fig. 1 ist der Leiter mit insgesamt 3 Schirmen versehen, die auf den Leiter 14 aufgeschoben und in einem definierten axialen Abstand zueinander angeordnet sind.

Um ein derart gestaltetes Anschlussstück 12, das von einem ursprünglich schlanken Leiter 14 gebildet ist, der mit radial abstehenden, das Raumprofil beträchtlich erhöhenden Schirmen 16 versehen ist, mit einer ausreichenden Isolierung zu versehen, kommen herkömmliche montierbare Isolierungen, wie Isolierschläuche, nicht in Betracht.

Stattdessen erfolgt erfindungsgemäß eine Beschichtung der Oberfläche des Anschlussstückes 12 mit Isoliermaterial im Tauchbad. Hierzu wird das vorgefertigte Anschlussstück, das heißt der mit radial abstehenden Schirmen 16 versehene Leiter 14, erwärmt und nach Erreichen einer vorgegebenen Temperatur, zum Beispiel 150 °C, in ein mit pulverförmigem Isoliermaterial gefülltes Behältnis eingetaucht und darin bewegt, so dass die gesamte Oberfläche des Anschlussstückes 12 mit dem pulverförmigem Isoliermaterial bedeckt ist.

Nach einer festgelegten Verweildauer wird das derart beschichtete Anschlussstück aus dem mit dem pulverförmigen Isoliermaterial gefüllten Behältnis entnommen und zum Abkühlen abgelegt. Ein zu rasches Abkühlen, zum Beispiel im Sinne eines Abschreckens, ist zu vermeiden, um mögliche Porenbildung zu vermeiden. Vielmehr soll durch eine geringe Abkühlgeschwindigkeit erreicht werden, dass das beim Eintauchen in das mit dem pulverförmigen Isoliermaterial gefüllte Behältnis auf der Oberfläche des Anschlussstückes 12 angelagerte und infolge dessen Erwärmung geschmolzene Pulver aus Isoliermaterial eine möglichst homogene Isolierschicht mit geschlossener Oberfläche bildet, die sowohl schmutzabweisend als auch kriechstromfest ist.

Wie in der Darstellung der Fig. 1 klar zu erkennen ist, weist die linke Seite des Anschlussstückes 12, das heißt der mit I markierte Bereich links der senkrechten Linie, eine Isolierbeschichtung 18 auf, während die rechte Hälfte, das heißt der mit II markierte Bereich rechts der senkrechten Linie, im noch unbeschichteten Zustand, das heißt vor der Beschichtung, gezeigt ist.

In Fig. 2 ist eine Stirnansicht auf einen erfindungsgemäßen Leiteranschluss 10 wiedergegeben. Aus dieser Darstellung ist klar erkennbar, dass ein Leiter 14 mit rechteckförmigem Querschnitt quasi zentral angeordnet ist und vollumfänglich von einem breiten Rand eingefasst ist. Dieser breite Rand ist von wenigstens einem auf den Leiter 14 aufgeschobenen Schirm 16 gebildet, der nicht nur eng an der Oberfläche des Leiters 14 anliegt, sondern vorzugsweise zumindest punktuell mit dem Leiter einstückig verbunden ist.

Es ist generell aber auch möglich einen Leiter 14 mit rundem Querschnitt vorzusehen, an welchem dann mit entsprechend runden radial abstehenden Schirmen 16 im Abstand zueinander angeordnet sind.

## Patentansprüche

1. Leiteranschluss (10) für Transformatoren, insbesondere für Trockentransformatoren, mit einem Anschlussstück (12), welches von einem Leiter (14) aus elektrisch leitfähigem Material gebildet ist, der mit einem Ende einer Wicklung des Transformators leitend verbindbar ist, wobei
das Anschlussstück (12) in geringem Abstand zu einem weiteren Anschlussstück mit unterschiedlichem Potential anordenbar ist und an seinem Umfang zumindest abschnittweise mit einer elektrischen Isolierung (18) versehen ist, wobei der das Anschlussstück (12) bildende Leiter (14) mit wenigstens einem radial abstehenden elektrisch leitfähigen Schirm (16) versehen ist, dessen Anschlussbereich punktuell oder vollumfänglich elektrisch leitend mit dem Leiter (14) elektrisch leitend verbunden ist, und wobei der Leiter (14) wie auch der wenigstens eine radial abstehende Schirm (16) mit einer Isolierung (18) versehen sind, **dadurch gekennzeichnet, dass** als Isolierung die Umfangsfläche des Anschlussstückes (12) sowie die gesamte Oberfläche des wenigstens einen radial abstehenden Schirms (16) mit elektrisch nicht leitfähigem Material (18) beschichtet ist.

2. Leiteranschluss, nach einem der vorherigen Ansprüche, **dadurch gekennzeichnet, dass** die Isolierung (18) des Anschlussstücks (12) einschließlich des wenigstens einen radial abstehenden Schirms (16) von einer Pulverlackschicht aus elektrisch nicht leitfähigem Material gebildet ist.

3. Leiteranschluss nach einem der vorherigen Ansprüche, **dadurch gekennzeichnet, dass** das Anschlussstück (12) mit wenigstens 3 Schirmen (16) versehen ist.

4. Leiteranschluss nach einem der vorherigen Ansprüche, **dadurch gekennzeichnet, dass** als elektrisch nicht leitendes Material für die Isolierbeschichtung (18) ein Pulverlack aus Epoxydharz vorgesehen ist.

5. Leiteranschluss nach einem der Ansprüche 1 bis 3, **dadurch gekennzeichnet, dass** als elektrisch nicht leitendes Material für die Isolierbeschichtung (18) ein Pulverlack aus Polyesterharz vorgesehen ist.

6. Leiteranschluss nach einem der Ansprüche 1 bis 3, **dadurch gekennzeichnet, dass** als elektrisch nicht leitendes Material für die Isolierbeschichtung (18) ein Pulverlack aus Acrylharz vorgesehen ist.

7. Leiteranschluss nach einem der vorherigen Ansprüche, **dadurch gekennzeichnet, dass** die Schichtdicke der Isolierschicht (18) zwischen 0,5 mm und 2,5 mm beträgt.

8. Leiteranschluss nach einem der vorherigen Ansprüche, **dadurch gekennzeichnet, dass** die Schichtdicke der Isolierschicht (18) vorzugsweise 1 mm beträgt.

9. Leiteranschluss nach einem der vorherigen Ansprüche, **dadurch gekennzeichnet, dass** die Isolierung (18) in Bereichen von Querschnittsänderungen und Kanten als abgerundete Schicht mit verhältnismäßig großen Radien ausgeführt ist, so dass mögliche Spannungskonzentrationen des elektrischen Feldes vermieden sind.

10. Verfahren zur Herstellung eines Leiteranschlusses nach einem der vorherigen Ansprüche, **dadurch gekennzeichnet, dass**
in einem ersten Schritt der als Anschlussstück (12) vorgesehene Leiter (14) mit der vorgesehenen Anzahl von Schirmen (16) versehen wird, dass in einem zweiten Schritt die Schirme (16) im vorgesehenen Abstand mit dem als Anschlussstück (12) vorgesehenen Leiter (14) verbunden werden, dass in einem dritten Schritt das aus dem Leiter (14) und den daran befestigten Schirmen (16) gebildete Anschlussstück (12) erwärmt und in ein Behältnis mit einem darin befindlichen Pulverlack eingetaucht und darin bewegt wird, wobei der Pulverlack an der Oberfläche des erwärmten Anschlussstückes anhaftet und eine geschlossene porenfreie Schicht (18) bildet, und dass das dieserart beschichtete Anschlussstück (12) nach einer vorgegebenen Verweildauer wieder entnommen, abgekühlt und mit dem betreffenden Ende der Wicklung des Transformators verbunden wird.

11. Verfahren nach Anspruch 10, **dadurch gekennzeichnet, dass** das Anschlussstück elektrostatisch anstatt thermisch beschichtet wird.

12. Verfahren nach Anspruch 10, **dadurch gekennzeichnet, dass** das Anschlussstück elektrophoretisch anstatt thermisch beschichtet wird.

## Claims

1. Conductor connection (10) for transformers, in particular for dry-type transformers, with a connection piece (12), which is formed by a conductor (14) consisting of electrically conductive material, which can be conductively connected to one end of a winding of the transformer, wherein the connection piece (12) can be arranged at a short distance from a further connection piece with a different potential and is provided at least sectionally over its circumference with electrical insulation (18), wherein the conductor (14) forming the connection piece (12) is provided with at least one radially protruding, electrically conductive shield (16), whose connection region is electrically conductively connected at certain points or over the entire circumference to the conductor (14), and wherein the conductor (14), as well as the at least one radially protruding shield (16), are provided with insulation (18), **characterized in that**, as insulation, the circumferential surface of the connection piece (12) and the entire surface of the at least one radially protruding shield (16) are coated with electrically nonconductive material (18).

2. Conductor connection according to one of the preceding claims, **characterized in that** the insulation (18) of the connection piece (12) including the at least one radially protruding shield (16) is formed by a powdered paint layer consisting of an electrically nonconductive material.

3. Conductor connection according to one of the preceding claims, **characterized in that** the connection piece (12) is provided with at least three shields (16).

4. Conductor connection according to one of the preceding claims, **characterized in that** a powder paint consisting of epoxy resin is provided as electrically nonconductive material for the insulating coating (18).

5. Conductor connection according to one of Claims 1 to 3, **characterized in that** a powder paint consisting of polyester resin is provided as electrically nonconductive material for the insulating coating (18).

6. Conductor connection according to one of Claims 1 to 3, **characterized in that** a powder paint consisting of acrylic resin is provided as electrically nonconductive material for the insulating coating (18).

7. Conductor connection according to one of the preceding claims, **characterized in that** the layer thickness of the insulating layer (18) is between 0.5 mm and 2.5 mm.

8. Conductor connection according to one of the preceding claims, **characterized in that** the layer thickness of the insulating layer (18) is preferably 1 mm.

9. Conductor connection according to one of the preceding claims, **characterized in that** the insulation (18) in regions of changes in cross section and edges is embodied as a rounded layer with comparatively large radii, with the result that possible voltage concentrations of the electric field are avoided.

10. Method for producing a conductor connection according to one of the preceding claims, **characterized in that**, in a first step, the conductor (14) provided as connection piece (12) is provided with the predetermined number of shields (16), **in that**, in a second step, the shields (16) are connected, at the intended distance, to the conductor (14) provided as connection piece (12), **in that**, in a third step, the connection piece (12) formed from the conductor (14) and the shields (16) fastened thereto is heated and is dipped into a container with a powdered paint located therein and is moved therein, wherein the powdered paint adheres to the surface of the heated connection piece and forms a closed, pore-free layer (18), and **in that** the connection piece (12) coated in this way is removed again after a predetermined residence time, cooled and is connected to the relevant end of the winding of the transformer.

11. Method according to Claim 10, **characterized in that** the connection piece is coated electrostatically instead of thermally.

12. Method according to Claim 10, **characterized in that** the connection piece is coated electrophoretically instead of thermally.

## Revendications

1. Borne pour câble (10) pour transformateurs, en particulier pour transformateurs à sec, avec un élément de raccordement (12) qui est formé par un conducteur (14) en un matériau à capacité électro-conductrice, lequel peut être relié avec une extrémité d'un enroulement du transformateur de manière conductrice, l'élément de raccordement (12) pouvant être disposé à une plus faible distance d'un autre élément de raccordement avec un potentiel différent et étant muni sur son pourtour, au moins sur certaines portions, d'une isolation électrique (18), le conducteur (14) formant l'élément de raccordement (12) étant muni d'au moins un écran (16) à capacité électro-conductrice en saillie radiale dont la zone de raccordement est reliée ponctuellement, ou sur tout le pourtour, avec le conducteur (14) de manière électro-conductrice, et le conducteur (14) tout comme également l'au moins un écran (16) en saillie radiale étant munis d'une isolation (18), **caractérisée en ce que**, en guise d'isolation, la surface périphérique de l'élément de raccordement (12) ainsi que la totalité de la surface de l'au moins un écran (16) en saillie radiale sont revêtues d'un matériau (18) sans capacité électro-conductrice.

2. Borne pour câble selon la revendication précédente, **caractérisée en ce que** l'isolation (18) de l'élément de raccordement (12), y compris de l'au moins un écran (16) en saillie radiale, est formée par une couche de peinture en poudre en un matériau sans capacité électro-conductrice.

3. Borne pour câble selon l'une des revendications précédentes, **caractérisée en ce que** l'élément de raccordement (12) est muni d'au moins trois écrans (16).

4. Borne pour câble selon l'une des revendications précédentes, **caractérisée en ce que** l'on prévoit, en guise de matériau non électro-conducteur pour le revêtement isolant (18), une peinture en poudre de résine époxy.

5. Borne pour câble selon l'une des revendications 1 à 3, **caractérisée en ce que** l'on prévoit, en guise de matériau non électro-conducteur pour le revêtement isolant (18), une peinture en poudre de résine de polyester.

6. Borne pour câble selon l'une des revendications 1 à 3, **caractérisée en ce que** l'on prévoit, en guise de matériau non électro-conducteur pour le revêtement isolant (18), une peinture en poudre de résine acrylique.

7. Borne pour câble selon l'une des revendications précédentes, **caractérisée en ce que** l'épaisseur de couche de la couche isolante (18) est comprise entre 0,5 mm et 2,5 mm.

8. Borne pour câble selon l'une des revendications précédentes, **caractérisée en ce que** l'épaisseur de couche de la couche isolante (18) est de préférence de 1 mm.

9. Borne pour câble selon l'une des revendications précédentes, **caractérisée en ce que** l'isolation (18) est réalisée, dans des zones de modification de section transversale et d'arêtes, en tant que couche arrondie avec des rayons relativement grands, de sorte que de possibles concentrations de tension du champ électrique sont évitées.

10. Procédé pour la fabrication d'une borne pour câble selon l'une des revendications précédentes, **caractérisé en ce que**
lors d'une première étape, le conducteur (14) prévu en tant qu'élément de raccordement (12) est équipé du nombre d'écrans (16) prévu, **en ce que** lors d'une deuxième étape, on relie les écrans (16) à la distance prévue avec le conducteur (14) prévu en tant qu'élément de raccordement (12), **en ce que** lors d'une troisième étape, l'élément de raccordement (12) formé par le conducteur (14) et les écrans (16) fixés dessus est chauffé et est plongé dans un récipient contenant une peinture en poudre et y est remué, la peinture en poudre collant sur la surface de l'élément de raccordement chauffé et formant une couche (18) fermée sans pores, et **en ce que** l'élément de raccordement (12) revêtu de cette manière, après un temps de séjour prédéterminé, est de nouveau ressorti, refroidi et relié avec l'extrémité concernée de l'enroulement du transformateur.

11. Procédé selon la revendication 10, **caractérisé en ce que** l'élément de raccordement est revêtu de manière électrostatique au lieu de thermique.

12. Procédé selon la revendication 10, **caractérisé en ce que** l'élément de raccordement est revêtu de manière électro-phorétique au lieu de thermique.
